# EUROPÄISCHE PATENTANMELDUNG

(11) **EP 4 386 268 A1**
(43) Veröffentlichungstag der Anmeldung: **19.06.2024**
(21) Anmeldenummer: 23210131.1
(22) Anmeldetag: 15.11.2023
(51) Int. Cl.: F24C 15/16, A47J 37/06

(54) **PIZZA-BACK-GRILL-PLATTE**

(30) Priorität: 12.12.2022 DE 102022213457
(71) Anmelder: BSH Hausgeräte GmbH, 81739 München (DE)
(72) Erfinder: Radloff, Carla, 83339 Chieming (DE); Beyer, Ludwig, 84558 Kirchweidach (DE); Akca, Serdar, 10587 Berlin (DE); Peter, Marco, 81825 München (DE)

(57) **Zusammenfassung**

Die vorliegende Erfindung betrifft einen Aufsatz (2) für einen Gitterrost (26) in einem Garraum eines Gargeräts, insbesondere in einem Backofen, mit einer Auflagefläche (4) oder Backzone, auf der ein Gargut platziert werden kann, wobei der Aufsatz (2) ausgebildet ist, um auf zumindest einer vorderen und einer hinteren Querstrebe (28; 30) des Gitterrostes (26) lose platziert und davon wieder entfernt werden zu können. Der Aufsatz (2) ist aus einer im Wesentlichen rechteckförmigen Metallplatte, insbesondere Stahlplatte, gebildet und derart geformt, dass im aufgesetzten Zustand eine Vorderkante (6) des Aufsatzes (2) die vordere Querstrebe (28) des Gitterostes (26) zumindest abschnittsweise, vorzugsweise über die gesamte Breite des Aufsatzes (2), übergreift und eine Hinterkante (8) des Aufsatzes (2) die hintere Querstrebe (30) des Gitterostes (26) zumindest abschnittsweise, vorzugsweise über die gesamte Breite (B) des Aufsatzes (2), umgreift. Weiterhin offenbart die vorliegende Erfindung ein System aus dem Aufsatz (2) und dem Gitterrost (26).

## Beschreibung

### Technisches Gebiet

Die vorliegende Offenbarung betrifft einen Aufsatz für einen in einem Garraum eines Gargeräts platzierbaren oder platzierten Gitterrost und ein System aus dem Aufsatz und dem Gitterrost.

Heiße Steine zur Zubereitung von Pizzagerichten, Broten, Brötchen, aber auch Fleisch-und Fischgerichten in einem heimischen Backofen sind weit verbreitet. Derartige heiße Steine bestehen aus Keramik, Coderit oder Schamott und werden in einen Garraum des Backofens eingebracht und mithilfe von Heizelementen des Backofens vorgeheizt. Ein derartiger Vorheizvorgang nimmt bei einem derartigen heißen Stein viel Zeit und (elektrische) Energie in Anspruch.

Des Weiteren sind heiße Steine aus den genannten Materialien aufgrund einer porösen Oberflächenstruktur nur eingeschränkt zu reinigen und, insbesondere bei schnellen Abkühlvorgängen, erheblich riss- und bruchgefährdet. Daher ist eine langsame Abkühlung, vorzugsweise in dem Gargerät, nach einer Benutzung des heißen Steins notwendig und ein schnelles Wechseln zwischen einer Zubereitung verschiedener Gerichte ist eingeschränkt bzw. nicht möglich.

Aufgabe der vorliegenden Erfindung ist es daher, die Nachteile aus dem Stand der Technik zu beheben oder zumindest zu reduzieren. Konkret ist es Aufgabe der vorliegenden Erfindung, eine Vorrichtung bereitzustellen, welche einfacher in einer Handhabung, insbesondere in einer Reinigung und einem Wechsel der Zubereitungsart, ist als ein heißer Stein, ohne dabei Abstriche in einer Garqualität machen zu müssen.

Diese Aufgabe wird gelöst durch einen Aufsatz nach Anspruch 1 sowie durch ein System aus dem Aufsatz und einem Gitterrost nach einem nebengeordneten Anspruch. Vorteilhafte Weiterbildungen der Erfindung sind in den Unteransprüchen und nachfolgend beschrieben. Konkret wird die Aufgabe gelöst durch einen Aufsatz für einen Gitterrost in einem Garraum eines Gargeräts, insbesondere in einem Backofen, mit einer Auflagefläche oder Backzone, auf der ein Gargut platziert werden kann, wobei der Aufsatz ausgebildet ist, um auf zumindest einer vorderen und einer hinteren Querstrebe des Gitterrostes lose platziert/ aufgesetzt und davon wieder entfernt werden zu können. Der Aufsatz ist aus einer im Wesentlichen rechteckförmigen, vorzugsweise beschichteten, Metallplatte, insbesondere Stahlplatte, gebildet und derart geformt, dass im aufgesetzten Zustand eine Vorderkante des Aufsatzes die vordere Querstrebe des Gitterostes zumindest abschnittsweise, vorzugsweise über die gesamte Breite des Aufsatzes, übergreift und eine Hinterkante des Aufsatzes die hintere Querstrebe des Gitterostes zumindest abschnittsweise, vorzugsweise über die gesamte Breite des Aufsatzes, umgreift.

In anderen Worten wird die Aufgabe gelöst durch den Aufsatz, der vorgesehen und ausgebildet ist, auf einem Gitterrost platziert zu werden. Unter dem Gitterrost ist ein Trägerelement zu verstehen, dass mit/ aus drahtähnlichen, vorzugsweise kreiszylindrischen, Stäben ausgebildet ist, welche sich zumindest parallel nebeneinander in einem Rahmen erstrecken.

Der Gitterrost ist vorgesehen ausgebildet, auf Schienen des Gargeräts in dem Garraum platziert zu werden. Der Gitterrost beinhaltet die vordere Querstrebe und die hintere Querstrebe, welche sich in einem eingesetzten Zustand des Gitterrosts im Wesentlichen zwischen Seitenwänden des Garraums erstrecken. Die vordere Querstrebe ist dabei zu einer im Regelfall mit einer Tür verschließbaren Garraumöffnung hin orientiert. Die hintere Querstrebe ist in dem eingesetzten Zustand hin zu einer Rückwand des Garraums orientiert. Die hintere Querstrebe und die vordere Querstrebe sind parallel zueinander ausgebildet. In dem eingesetzten Zustand ist der Gitterrost im Wesentlichen horizontal in dem Garraum des Gargeräts angeordnet.

Der Aufsatz ist plattenförmig, im Wesentlichen rechteckig ausgebildet und besteht aus Metall, insbesondere Stahl. Bevorzugt kann es sich bei dem Stahl um einen Edelstahl handeln. Der Aufsatz kann beschichtet, vorzugsweise emailliert, sein. Durch eine derartige Ausbildung kann eine Vorrichtung bereitgestellt werden, die eine Zubereitung von Pizzagerichten, Broten, Brötchen aber auch Fleisch-und Fischgerichten in einem heimischen Backofen ermöglicht, ohne eine lange Aufheizzeit wie ein heißer Stein zu benötigen. Weiterhin kann ein derartiger Aufsatz leicht gereinigt werden.

Der Aufsatz beinhaltet die Vorderkante, welche in einem aufgesetzten Zustand die vordere Querstrebe des Gitterrosts derart übergreift, dass vor vorne gesehen, d.h. von einer Garraumöffnung in Richtung hin zum Garraum, ein Spalt zwischen Aufsatz und vordere Querstrebe des Gitterrostes durch die Vorderkannte abgedeckt ist. Die Vorderkannte ist bevorzugt über die komplette Breite des Aufsatzes ausgebildet. Es sind jedoch auch Ausführungsformen vorstellbar, in denen die Vorderkante unterbrochen, beispielsweise mit Ausschnitten, ausgebildet ist.

Unter "Übergreifen" ist zu verstehen, dass die Vorderkante die vordere Querstrebe in dem aufgesetzten Zustand sowohl von oben als auch, zumindest teilweise, von vorne überdeckt/ abdeckt.

Die Vorderkante, welche den Spalt zwischen Aufsatz und vorderer Gitterroststrebe abdeckt, dient dadurch als eine Einführhilfe, um beim Platzieren, Wenden, Verschieben, Herausnehmen etc. des Garguts auf bzw. von der Auflagefläche mittels eines Schiebers oder eines anderen Hilfsmittels oder Werkzeugs ein versehentliches Einfädeln des Schiebers bzw. des anderen Hilfsmittels/ Werkzeugs zwischen Aufsatz und Gitterrost zu vermeiden/ zu verhindern.

Die Hinterkante, welche gegenüberliegend/ abgewandt von der Vorderkante an dem Aufsatz ausgebildet ist, umgreift in dem aufgesetzten Zustand die hintere Querstrebe des Gitterrosts zumindest abschnittsweise. Die Hinterkante ist bevorzugt über die komplette Breite des Aufsatzes ausgebildet. Es sind jedoch auch Ausführungsformen vorstellbar, in denen die Hinterkante unterbrochen, beispielsweise mit Ausschnitten, ausgebildet ist.

Unter "Umgreifen" ist zu verstehen, dass die Hinterkante die hintere Querstrebe in dem aufgesetzten Zustand sowohl von oben als auch zumindest von hinten vollständig überdeckt/ abdeckt.

Insbesondere durch die Hinterkante kann ein Benutzer auch mit seifigen Händen, beispielsweise beim Reinigen, den Aufsatz sicher greifen und halten. Weiterhin fixiert die Hinterkante den Aufsatz zumindest in einer Richtung von der Rückwand des Garraums hin zu der Garraumöffnung formschlüssig an dem Gitterrost, sodass ein versehentliches Herausziehen des Aufsatzes bei einem Entfernen des Garguts aus dem Garraum durch den Benutzer verhindert werden kann. Weiterhin bildet die Hinterkante eine Geometrie, die ein einfaches Aufhängen des Aufsatzes bei einem Beschichtungsvorgang während eines Herstellprozesses ermöglicht.

Da im aufgesetzten Zustand die Vorderkante des Aufsatzes die vordere Querstrebe des Gitterostes übergreift und die Hinterkante des Aufsatzes die hintere Querstrebe des Gitterostes umgreift, sind Aufsatz und Gitterost in einer Vorne-Hinten-Richtung bzw. Längsrichtung, zumindest in einer Ausziehrichtung, formschlüssig miteinander verbunden. Dadurch wird verhindert, dass bei Platzieren des Garguts auf der Auflagefläche des Aufsatzes und bei Entfernen des Garguts von der Auflagefläche des Aufsatzes der Aufsatz versehentlich bewegt werden kann, sondern zusammen mit dem Gitterrost eine Einheit bildet.

Bevorzugt kann der Aufsatz einstückig ausgebildet sein. Das heißt, dass der Aufsatz aus einem zusammenhängenden Stück Metall, insbesondere Stahl, ausgebildet sein kann, welches anschließend beschichtet wurde. Die Hinterkante kann bei einem Beschichtungsvorgang zum sicheren Aufhängen des Aufsatzes verwendet werden.

Gemäß einem Aspekt kann der Aufsatz aus einer Platte mit konstanter Materialstärke ausgebildet und in sich geformt sein. Dies erleichtert die Herstellung des erfindungsgemäßen Aufsatzes.

In einem weiteren Aspekt kann die Blechstärke kleiner als 5 mm und vorzugsweise kleiner als 3 mm sein.

In einem Aspekt kann die Hinterkante im Wesentlichen U-förmig mit einer sich zu einer Unterseite des Aufsatzes hin öffnende Geometrie ausgebildet sein, um die hintere Querstrebe zumindest von drei Seiten, insbesondere von vorne, oben und hinten, umgreifen zu können.

In anderen Worten kann die Hinterkante durch dreimaliges Abkanten ausgebildet sein bzw. als ein dreimal abgekanteter Blechabschnitt ausgebildet sein. Die Hinterkante kann eine Öffnung aufweisen, welche auf eine Geometrie der hinteren Querstrebe abgestimmt ist und sich hin zu dem Gitterrost öffnet. Die Hinterkante kann ausgebildet sein, die hintere Querstrebe in einem aufgesetzten Zustand, vorzugsweise um ungefähr 270°, zu umgeben/ umgreifen.

In nochmals anderen Worten kann die Hinterkante mit einer eckigen (gebrochenen) Herzkontur ausgebildet sein.

Durch eine derartige Ausbildung der Hinterkante kann ein einfaches Aufsetzen des Aufsatzes auf den Gitterrost ermöglicht werden, wobei eine zuverlässige Fixierung des Aufsatzes auf dem Gitterrost gewährleistet werden kann.

In einem weiteren Aspekt kann zwischen Vorderkante und Hinterkante die, insbesondere plane, Auflagefläche vorgesehen sein.

In anderen Worten kann es sich bei der Auflagefläche/ Backzone um eine geschlossene Fläche handeln, welche in einem eingesetzten/ aufgesetzten Zustand parallel zu den Streben des Gitterrostes bzw. parallel zu einem Boden des Garraums und einer Decke des Garraums angeordnet ist.

In einem weiteren Aspekt kann die Vorderkante sich von der Auflagefläche nach vorne und unten erstrecken. Die Vorderkante kann insbesondere in einem überstumpfen Winkel nach unten abgewinkelt sein. Besonders bevorzugt ist die Vorderkante in einem Winkelbereich von 190° bis 260° oder 210° bis 240° zu der Auflagefläche abgewinkelt.

In anderen Worten kann die Vorderkante satteldachförmig mit der Auflagefläche verbunden sein.

In einem zusätzlichen Aspekt kann die Hinterkante gegenüber der Auflagefläche erhöht oder hochgezogen sein und einen die Auflagefläche begrenzenden Wandabschnitt ausbilden.

In anderen Worten kann die Hinterkante sich in einer Höhenrichtung weg von der Auflagefläche erstrecken, wobei die Öffnung der Hinterkante im Wesentlichen in einer Ebene der Auflagefläche angeordnet sein kann. Der begrenzende Wandabschnitt, welcher durch die Hinterkante ausgebildet ist, kann als ein sog. Brösel-Stopp oder Anschlag fungieren, welcher verhindert, dass Gargut oder Bestandteile des Garguts nach hinten von dem Aufsatz fallen/geschoben werden und den Garraum verschmutzen.

In einem weiteren Aspekt können Außenkanten des Aufsatzes verrundet sein.

In anderen Worten können die Außenkanten des Aufsatzes mit einem Radius ausgebildet sein, um bei einer Handhabung keine Kratzer/ Beschädigungen oder Verletzungen zu erzeugen.

In einem weiteren Aspekt kann die Auflagefläche eine flache, plane Vertiefung beinhaltet, welche vorzugsweise eine Tiefe von weniger als 5 mm aufweist.

In anderen Worten kann die Auflagefläche eine flache Fettfangpfanne beinhalten, welche vorgesehen ausgebildet ist, geringe Mengen von Flüssigkeit, welche beispielsweise beim Grillen austreten können, aufzufangen. Die Tiefe kann vorzugsweise weniger als 5 mm und insbesondere vorzugsweise weniger als 3 mm betragen.

Die Aufgabe der vorliegenden Erfindung wird weiterhin gelöst durch ein System aus einem Aufsatz nach einem der obigen Aspekte und einem Gitterrost, die zusammen zur Positionierung eines Garguts in einen Garraum eines Gargeräts, insbesondere in einem Backofen, eingebracht werden können, wobei der Gitterrost eine umlaufende Strebe oder vier in einem Rechteck miteinander verbundene Längs- und Querstreben aufweist. Eine Vorderkante des Aufsatzes übergreift die vordere Querstrebe des Gitterostes zumindest abschnittsweise, vorzugsweise über die gesamte Breite des Aufsatzes, und deckt von vorne gesehen einen Spalt zwischen Aufsatz und der vorderen Querstrebe ab. Eine Hinterkante des Aufsatzes umgreift die hintere Querstrebe des Gitterostes zumindest abschnittsweise, vorzugsweise über die gesamte Breite des Aufsatzes.

In anderen Worten wird die Aufgabe gelöst durch das System aus dem Aufsatz und dem Gitterrost. Der Gitterrost ist vorgesehen und ausgebildet, in Schienen, welche in dem Garraum des Gargeräts ausgebildet sind, positioniert zu werden. Insbesondere die Längsstreben, oder äquivalente Abschnitte der umlaufenden Strebe, des Gitterrosts sind ausgebildet, in die Schienen des Gargeräts aufgenommen zu werden. Zwischen den beiden Längsstreben ist zumindest die vordere Querstrebe und die hintere Querstrebe des Gitterrosts ausgebildet. Der Aufsatz ist vorgesehen und ausgebildet, auf dem Gitterrost positioniert zu werden, wobei der Aufsatz an der Vorderkante die vordere Querstrebe des Gitterrosts von oben und zumindest teilweise von vorne überdeckt. Die Vorderkante kann als ein abgekanteter Abschnitt des Aufsatzes ausgebildet sein, der abgewinkelt zu der Auflagefläche ausgebildet sein kann. Vorzugsweise kontaktiert die Vorderkante die vordere Querstrebe von (schräg) vorne. Der Spalt oder eine Kontaktfläche zwischen Auflagefläche des Aufsatzes und Gitterrost ist nach vorne, also in einem eingesetzten Zustand zu einer Garraumöffnung hin von der Vorderkante überdeckt/ abgeschirmt. Die Hinterkante des Aufsatzes umgreift die hintere Querstrebe vorzugsweise von drei Seiten. Insbesondere umgreift die Hinterkante die hintere Querstrebe U-förmig von vorne, hinten und oben.

Durch die Vorderkante ist ein einfaches Aufschieben eines Pizzaschiebers oder anderer Hilfsmittel/ Werkzeuge auf den Aufsatz für einen Benutzer erleichtert. Insbesondere kann durch die Vorderkante verhindert werden, dass der Benutzer mit dem Pizzaschieber zwischen den Aufsatz und den Gitterrost einfädelt. Die Vorderkante fungiert als ein Führungselement/ eine Führungsschräge. Durch die Hinterkante ist ein formschlüssiges Fixieren des Aufsatzes auf dem Gitterrost, zumindest in einer Auszugrichtung des Gitterrostes, gewährleistet.

In einem Aspekt kann ein Mittelabschnitt der vorderen Querstrebe des Gitterrosts in einer Höhenrichtung niedriger als die hintere Querstrebe des Gitterrosts angeordnet sein, um einen vorderen Abschnitt des Aufsatzes aufzunehmen und seitlich sichern zu können. Damit gibt es zwischen Aufsatz und Gitterrost nicht nur eine formschlüssige Verbindung in Vorne-Hinten-Richtung, sondern auch in Links-Rechts-Richtung bzw. Querrichtung.

Anders ausgedrückt können die hintere Querstrebe und die Längsstreben einen hochgesetzten Rahmen ausbilden, der den Gitterrost einrahmt, und in der vorderen Querstrebe kann der Mittelabschnitt als tiefgesetzte Öffnung in dem hochgesetzten Rahmen ausgebildet sein, welche den Aufsatz in einer Breitenrichtung fixiert.

In einem weiteren Aspekt können die vordere Querstrebe und in Längs- und Querrichtung verlaufende Zwischenstreben zur Aufnahme des Aufsatzes vertieft sein oder zumindest eine Vertiefung aufweisen.

Anders ausgedrückt können sowohl die vordere Querstrebe als auch die Zwischenstreben auf einer vertieften/ tiefer gestellten Ebene, bezogen auf die hintere Querstrebe, angeordnet sein oder eine Vertiefung beinhalten, sodass der Gitterrost eine flache Korbgeometrie mit der Öffnung in der vorderen Querstrebe ausbilden kann.

In einem weiteren Aspekt kann der Gitterrost im Bereich einer seitlichen Kante des Aufsatzes, vorzugsweise beidseitig, eine Aussparung und/oder Ausbuchtung aufweisen, welche eine Entnahmeöffnung zwischen Aufsatz und Gitterrost ausbildet und vorzugsweise als Standfuß des Gitterrosts fungiert.

In anderen Worten können in Streben des Gitterrosts, insbesondere in den Zwischenstreben, welche sich von Rändern des Mittelabschnitts der vorderen Querstrebe weg erstrecken die Aussparungen ausgebildet sein. In Bereichen der Aussparungen erstreckt sich die jeweilige Strebe in einer negativen Höhenrichtung weg von dem Aufsatz und bildet eine, insbesondere parabelförmige, Ausbeulung. Die Aussparungen können einerseits ausgebildet sein, damit ein Bediener mit einem Finger in die Aussparung eingreifen kann, um den Aufsatz mühelos von dem Gitterrost entfernen zu können. Andererseits kann die Aussparung gleichzeitig als der Standfuß für den Gitterrost fungieren und verhindern, dass die Vorderkante des Aufsatzes auf einer Unterlage aufsteht und sich damit von dem Gitterrost abhebt.

In einem weiteren Aspekt kann der Aufsatz durch Umformen und anschließendes Beschichten eines Blechzuschnitts ausgebildet sein.

In einem weiteren Aspekt kann die Hinterkante sich zwischen 5 mm und 15 mm in einer positiven Höhenrichtung weg von der Auflagefläche erstrecken.

### Kurzbeschreibung der Figuren

Fig. 1 ist eine perspektivische Darstellung eines erfindungsgemäßen Aufsatzes gemäß einer ersten Ausführungsform;
Fig. 2 ist eine perspektivische Darstellung des erfindungsgemäßen Aufsatzes gemäß einer zweiten Ausführungsform;
Fig. 3 ist eine vergrößerte Ansicht einer Hinterkante des Aufsatzes der ersten Ausführungsform;
Fig. 4 ist eine vergrößerte Ansicht der Hinterkante des Aufsatzes der zweiten Ausführungsform;
Fig. 5 ist eine vergrößerte Ansicht einer Vorderkante des Aufsatzes;
Fig. 6 ist eine perspektivische Darstellung eines erfindungsgemäßen Systems; und
Fig. 7 ist eine vergrößerte Ansicht des erfindungsgemäßen Systems.

### Beschreibung der Ausführungsformen

Nachstehend werden Ausführungsformen der vorliegenden Offenbarung auf der Basis der zugehörigen Figuren beschrieben.

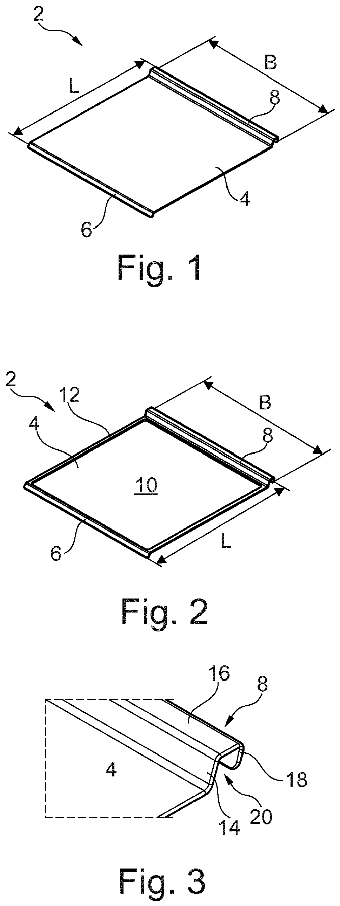

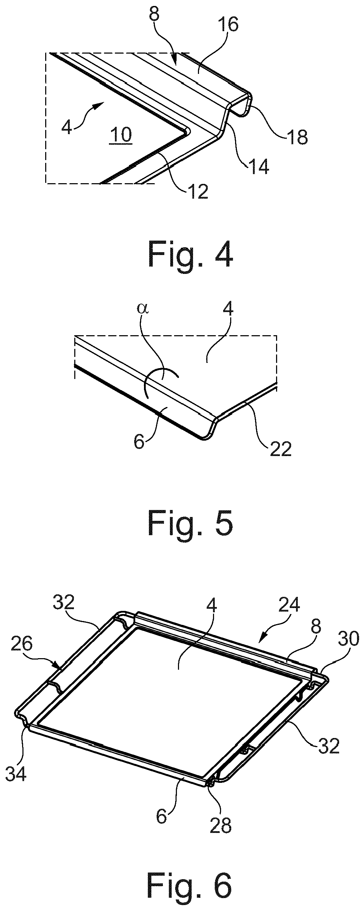

Fig. 1 zeigt einen erfindungsgemäßen Aufsatz 2 einer ersten Ausführungsform für einen Gitterrost (siehe beispielsweise 26 in Fig.6) zur Zubereitung eines Garguts in einem Garraum eines Gargeräts, insbesondere Backofen. Der Aufsatz 2 weist im Wesentlichen eine rechteckige Form auf und beinhaltet eine Auflagefläche 4, die vorgesehen und ausgebildet ist, das Gargut, vorzugsweise eine Pizza o. ä., aufzunehmen. Die Auflagefläche 4 ist als eine plane, ungebrochene Fläche ausgebildet.

Der Aufsatz 2 ist aus einer beschichteten Metallplatte, insbesondere eine emaillierten Stahlplatte, ausgebildet. Der Aufsatz 2 beinhaltet eine Vorderkante 6, die in einem eingesetzten/aufgesetzten Zustand zu einer Garraumöffnung des Garraums hin orientiert ist. Die Vorderkante 6 erstreckt sich über eine ganze Breite B des Aufsatzes 2. An einem von der Vorderkante 6 abgewandten Abschnitt des Aufsatzes 2 ist eine Hinterkante 8 ausgebildet. Die Hinterkante 8 erstreckt sich über die ganze Breite B des Aufsatzes 2. Sowohl die Vorderkante 6 als auch die Hinterkante 8 sind in einer Erstreckung in einer Längenrichtung L viel kleiner als die Auflagefläche 4. Eine Geometrie der Vorderkante 6 wird später anhand von Fig. 5 näher beschrieben. Eine Geometrie der Hinterkante 8 wird später anhand von Fig. 3 näher beschrieben. Die Vorderkante 6 und die Hinterkante 8 sind stoffeinstückig mit der Auflagefläche 4 ausgebildet. Anders ausgedrückt sind die Vorderkante 6 und die Hinterkante 8 durch Umformen der Metallplatte, vorzugsweise vor einem Beschichtungsvorgang, ausgebildet. Die Hinterkante 8 ist vorgesehen und ausgebildet, eine hintere Querstrebe 30 (siehe Fig.6) eines Gitterrosts 26 zu umgreifen/ aufzunehmen. Die Vorderkante 6 ist vorgesehen und ausgebildet, eine vordere Querstrebe 28 (siehe Fig.6) des Gitterrosts 26 zu übergreifen/ abzudecken.

Fig. 2 zeigt den erfindungsgemäßen Aufsatz 2 einer zweiten Ausführungsform. Die zweite Ausführungsform entspricht im Wesentlichen der ersten Ausführungsform, sodass auf eine erneute Beschreibung gleicher Elemente verzichtet wird. Die Auflagefläche 4 der zweiten Ausführungsform beinhaltet eine Vertiefung 10 mit einem umlaufenden Rand 12. Die Vertiefung 10 fungiert als eine Fettpfanne in der Auflagefläche 4 und weist eine Tiefe von wenigen Millimetern, vorzugsweise weniger als 5 mm auf.

Fig. 3 zeigt eine vergrößerte Ansicht der Hinterkante 8 der ersten Ausführungsform. Die Hinterkante 8 ist U-förmig bzw. hakenförmig ausgebildet und beinhaltet drei Abschnitte. Ein erster Abschnitt 14 erstreckt sich in einer positiven Höhenrichtung im Wesentlichen senkrecht weg von der Auflagefläche 4 und begrenzt die Auflagefläche 4 als ein Brösel-Stopp. An den ersten Abschnitt 14 schließt sich ein zweiter Abschnitt 16 an. Der zweite Abschnitt 16 ist im Wesentlichen parallel zu der Auflagefläche 4 orientiert und erstreckt sich weg von der Auflagefläche 4. An den zweiten Abschnitt 16 schließt sich ein dritter Abschnitt 18 an. Der dritte Abschnitt ist im Wesentlichen parallel zu dem ersten Abschnitt 14 orientiert und erstreckt sich, ausgehend von dem zweiten Abschnitt 16, in negativer Höhenrichtung. In der hier dargestellten Ausführungsform ist eine Erstreckung der Hinterkante 8 in der Höhenrichtung im Wesentlichen so groß wie eine Erstreckung der Hinterkante 8 in einer Längenrichtung. Eine Öffnungsfläche 20 der Hinterkante 8 ist zwischen dem dritten Abschnitt und einem Übergang von der Auflagefläche 4 zu dem ersten Abschnitt 14 ausgebildet. Anders ausgedrückt ist die Öffnungsfläche 20 im Wesentlichen in einer Ebene mit der Auflagefläche 4 angeordnet.

Fig. 4 zeigt eine vergrößerte Ansicht der Hinterkante 8 der zweiten Ausführungsform. Zwischen dem ersten Abschnitt 14 und der Auflagefläche 4 ist der umlaufenden Rand 12 ausgebildet. Ein Übergang von der Vertiefung zu dem umlaufenden Rand ist als ein Radius ausgebildet.

Fig. 5 zeigt eine vergrößerte Ansicht der Vorderkante 6 der ersten Ausführungsform. Die Vorderkante 6 erstreckt sich in einem Winkel α nach vorne und in negativer Höhenrichtung weg von der Auflagefläche 4. Anders ausgedrückt erstreckt sich die Vorderkante 6 schräg nach vorne und unten weg von der Auflagefläche 4. Der Winkel α ist dabei ein überstumpfer Winkel in einem Winkelbereich von 190° bis zu 160° oder 210° bis 240°. Die Vorderkante 6 bildet eine ansteigend rampenförmige Geometrie auf die Auflagefläche.

Umlaufenden Ränder/ Kanten 22 des Aufsatzes 2 sind abgerundet ausgebildet.

Fig. 6 zeigt ein System 24 aus dem Aufsatz 2 und dem Gitterrost 26. Der Gitterrost 26 beinhaltet die vordere Querstrebe 28 und die hintere Querstrebe 30, welche durch äußere Längsstreben 32 miteinander verbunden sind. In der hier dargestellten Ausführungsform sind die vordere Querstrebe 28, die hintere Querstrebe 30 und die äußeren Längsstreben 32 durch eine umlaufende, in sich geschlossene Strebe ausgebildet. Die vordere Querstrebe 28 beinhaltet eine in Höhenrichtung nach unten gezogene Öffnung 34. Die Öffnung 34 entspricht im Wesentlichen der Breite B des Aufsatzes 2. Die Vorderkante 6 übergreift die vordere Querstrebe 28 in einem Bereich der Öffnung 34 derart, dass ein Spalt zwischen dem Gitterrost 26 und dem Aufsatz 2 nach vorne hin (im eingesetzten Zustand zu der Garraumöffnung hin) abgedeckt ist. Anders ausgedrückt ist die vordere Querstrebe 28 nach oben und nach vorne durch die Auflagefläche 4 und die Vorderkante 6 abgedeckt.

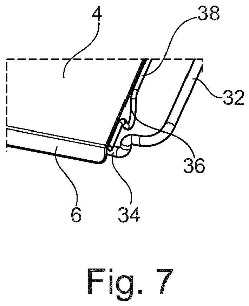

Fig. 7 zeigt eine vergrößerte Ansicht des Systems 24. der Gitterrost 26 beinhaltet Aussparungen 36 in Zwischenstreben 38. die Aussparungen 36 sind als parabelförmige Standfüße des Gitterrosts 26 ausgebildet. Insbesondere sind die Aussparungen 36 in den Zwischenstreben 38 des Gitterrost 26 ausgebildet, welche sich an Rändern der Öffnung 34 erstrecken, sodass sich die Aussparungen 36 in Randabschnitten des Aufsatzes 2 des Systems 24 befinden.

### Bezugszeichenliste

- 2: Aufsatz
- 4: Auflagefläche
- 6: Vorderkante
- 8: Hinterkante
- 10: Vertiefung
- 12: (umlaufender) Rand
- 14: erster Abschnitt
- 16: zweiter Abschnitt
- 18: dritter Abschnitt
- 20: Öffnungsfläche
- 22: umlaufender Rand
- 25: System
- 26: Gitterrost
- 28: vordere Querstrebe
- 30: hintere Querstrebe
- 32: äußere Längsstrebe
- 34: Öffnung
- 36: Aussparung
- 38: Zwischenstrebe
- L: Länge/ Längenrichtung
- B: Breite
- α: Winkel

## Patentansprüche

1. Aufsatz (2) für einen Gitterrost (26) in einem Garraum eines Gargeräts, insbesondere in einem Backofen, mit einer Auflagefläche (4) oder Backzone, auf der ein Gargut platziert werden kann, wobei der Aufsatz (2) ausgebildet ist, um auf zumindest einer vorderen und einer hinteren Querstrebe (28; 30) des Gitterrostes (26) lose platziert und davon wieder entfernt werden zu können, **dadurch gekennzeichnet, dass**
der Aufsatz (2) aus einer im Wesentlichen rechteckförmigen Metallplatte, insbesondere Stahlplatte, gebildet ist und derart geformt ist, dass im aufgesetzten Zustand eine Vorderkante (6) des Aufsatzes (2) die vordere Querstrebe (28) des Gitterostes (26) zumindest abschnittsweise, vorzugsweise über die gesamte Breite des Aufsatzes (2), übergreift und eine Hinterkante (8) des Aufsatzes (2) die hintere Querstrebe (30) des Gitterostes (26) zumindest abschnittsweise, vorzugsweise über die gesamte Breite (B) des Aufsatzes (2), umgreift.

2. Aufsatz (2) nach Anspruch 1, **dadurch gekennzeichnet, dass** die Hinterkante (8) im Wesentlichen U-förmig mit einer sich zu einer Unterseite des Aufsatzes (2) hin öffnende Geometrie ausgebildet ist, um die hintere Querstrebe (30) zumindest von drei Seiten, insbesondere von vorne, oben und hinten, umgreifen zu können.

3. Aufsatz (2) nach Anspruch 1 oder 2, **dadurch gekennzeichnet, dass** zwischen Vorderkante (6) und Hinterkante (8) die, insbesondere plane, Auflagefläche (4) vorgesehen ist,
die Vorderkante (6) sich von der Auflagefläche (4) nach vorne und unten erstreckt, insbesondere in einem überstumpfen Winkel (α) nach unten abgewinkelt ist, besonders bevorzugt in einem Winkelbereich von 190° bis 260° oder 210° bis 240°; und
die Hinterkante (8) gegenüber der Auflagefläche (4) erhöht oder hochgezogen ist und einen die Auflagefläche (4) begrenzenden Wandabschnitt (14) ausbildet.

4. Aufsatz (2) nach einem der Ansprüche 1 bis 3, **dadurch gekennzeichnet, dass** Außenkanten (22) des Aufsatzes (2) verrundet sind.

5. Aufsatz (2) nach einem der Ansprüche 1 bis 4, **dadurch gekennzeichnet, dass** die Auflagefläche (4) eine flache, plane Vertiefung beinhaltet, welche vorzugsweise eine Tiefe von weniger als 5 mm aufweist.

6. Aufsatz (2) nach einem der Ansprüche 1 bis 5, **dadurch gekennzeichnet, dass** die Metallplatte eine beschichtete Metallplatte ist.

7. System (24) aus einem Aufsatz (2) nach einem der Ansprüche 1 bis 6 und einem Gitterrost (26), die zusammen zur Positionierung eines Garguts in einen Garraum eines Gargeräts, insbesondere in einem Backofen, eingebracht werden können, wobei der Gitterrost (26) eine umlaufende Strebe oder vier miteinander verbundene Längs- und Querstreben (26; 30; 32) aufweist, **dadurch gekennzeichnet, dass** eine Vorderkante (6) des Aufsatzes (2) die vordere Querstrebe (28) des Gitterostes (26) zumindest abschnittsweise, vorzugsweise über die gesamte Breite (B) des Aufsatzes (2), übergreift und von vorne gesehen einen Spalt zwischen Aufsatz (2) und der vorderen Querstrebe (28) abdeckt und eine Hinterkante (8) des Aufsatzes (2) die hintere Querstrebe (30) des Gitterostes (26) zumindest abschnittsweise, vorzugsweise über die gesamte Breite (B) des Aufsatzes (2), umgreift.

8. System (24) nach Anspruch 7, **dadurch gekennzeichnet, dass** ein Mittelabschnitt (34) der vorderen Querstrebe (28) des Gitterrosts (26) in einer Höhenrichtung niedriger als die hintere Querstrebe (30) des Gitterrosts angeordnet ist, um einen vorderen Abschnitt des Aufsatzes (2) aufzunehmen und seitlich sichern zu können.

9. System (24) nach Anspruch 7 oder 8, **dadurch gekennzeichnet, dass** die vordere Querstrebe (28) und in Längs- und/ oder Querrichtung verlaufende Zwischenstreben (38) zur Aufnahme des Aufsatzes (2) vertieft sind oder eine Vertiefung aufweisen.

10. System (24) nach einem der Ansprüche 7 bis 9, **dadurch gekennzeichnet, dass** der Gitterrost (26) im Bereich einer seitlichen Kante des Aufsatzes (2), vorzugsweise beidseitig, eine Aussparung (36) und/oder Ausbuchtung aufweist, welche eine Entnahmeöffnung zwischen Aufsatz (2) und Gitterrost (26) ausbildet und vorzugsweise als Standfuß des Gitterrosts (26) fungiert.
